# EUROPÄISCHE PATENTANMELDUNG

(11) **EP 2 112 319 A2**
(43) Veröffentlichungstag der Anmeldung: **28.10.2009**
(21) Anmeldenummer: 09004854.7
(22) Anmeldetag: 02.04.2009
(51) Int. Cl.: E06B 9/17

(54) **Rollladenkasten**

(30) Priorität: 22.04.2008 DE 102008020298
(71) Anmelder: Kunststoffwerk Katzbach GmbH & Co. KG, 93413 Cham (DE)
(72) Erfinder: Erber, Arnold, 93413 Cham (DE)
(74) Vertreter: Blaumeier, Jörg

(57) **Zusammenfassung**

Rollladenkasten, mit einer im Wesentlichen quaderförmigen Grundform, in dem ein Hohlraum zum Aufnehmen eines Rollladenpanzers gebildet ist, wobei an einer oder mehreren den Hohlraum begrenzenden Wänden des Rollladenkastens eine Dämmplatte aus einem wärmedämmenden Material angebracht ist und wobei die Dämmplatte (1, 6, 10, 13) aus expandiertem Polyethylen (EPE) oder expandiertem Polypropylen (EPP) besteht.

## Beschreibung

Die Erfindung betrifft einen Rollladenkasten, mit einer im Wesentlichen quaderförmigen oder ovalen Grundform, in dem ein Hohlraum zum Aufnehmen eines Rollladenpanzers gebildet ist, wobei an einer oder mehreren den Hohlraum begrenzenden Wände des Rollladenkastens eine Dämmplatte aus einem Wärme dämmendem Material angebracht ist.

In den vergangenen Jahrzehnten sind sehr viele Rollladenkästen ohne oder mit unzureichender Wärmedämmung hergestellt worden. In vielen älteren Gebäuden sind daher im Bereich der Rollladenkästen Wärmebrücken vorhanden, durch die Wärme aus den geheizten Innenräumen nach außen gelangen kann, was in einem hohen Energieverbrauch resultiert. Derartige ungedämmte oder unzureichend gedämmte Rollladenkästen besitzen eine vergleichsweise große Fläche, durch die warme Luft nach außen dringen kann, häufig gelangt durch die Undichtigkeiten auch kühle Zugluft in das Gebäudeinnere.

Um diesem Mangel abzuhelfen ist in der DE 10 2005 061 172 A1 ein Dämmsystem aus flexiblen Platten vorgeschlagen worden, die im Rahmen einer Sanierung nachträglich in nicht oder unzureichend gedämmte Rollladenkästen eingebracht werden können. Dieses aufwändige Dämmsystem besteht aus zwei Dämmplatten und einer Zwischenlage als Dampfsperre. Die beiden äußeren Dämmplatten weisen mehrere parallel verlaufende Schlitze auf, durch die eine Verformbarkeit gewährleistet wird. Durch diese Schlitze wird jedoch die Wandstärke der Dämmplatte beträchtlich verringert, sodass es fraglich ist, ob die gewünschte Wärmedämmung in der Praxis erreicht werden kann. Die Dämmplatten bestehen aus Polystyrol, das nicht oder lediglich geringfügig gebogen werden kann, da es ansonsten zu Rissen kommen würde. Zusätzlich sind zwischen den Dämmplatten aus Stahl bestehende Federelemente angeordnet, sodass die Dämmplatten federelastisch in dem Rollladenkasten gehalten werden können. Obwohl mit diesem Dämmsystem die gewünschte Wärmedämmung erzielt werden kann, weist es den Nachteil auf, dass der Aufbau kompliziert und damit teuer ist. Weiterhin müssen derartige Polystyrol-Platten sehr arbeits- und zeitaufwändig bearbeitet sowie befestigt werden, da der Zuschnitt aufgrund des Metallgitters in den Platten nur mit einem Winkelschleifer erfolgen kann.

Der Erfindung liegt somit die Aufgabe zugrunde, einen Rollladenkasten anzugeben, bei dem die Dämmung einfacher realisiert werden kann.

Zur Lösung dieser Aufgabe ist bei einem Rollladenkasten der eingangs genannten Art erfindungsgemäß vorgesehen, dass die Dämmplatte aus expandiertem Polyethylen (EPE) oder expandiertem Polypropylen (EPP) besteht.

Diese beiden erfindungsgemäß vorgesehenen Materialien lassen sich im Vergleich zu dem herkömmlicherweise verwendeten Polystyrol beim Einbau in einen Rollladenkasten biegen bzw. verformen sowie individuell zuschneiden, ohne dass weitere Maßnahmen erforderlich sind, mit denen das Entstehen von Rissen in der Dämmplatte verhindert wird, somit ist eine individuelle Anpassung an jegliche Kastenform durch einfachen Zuschnitt z. B. mit einem Cuttermesser möglich, ohne dass eine Materialschwächung erfolgt, wodurch eine durchgehende Wärmedämmung gewährleistet ist.

Sowohl das expandierte Polyethylen als auch das expandierte Polypropylen sind so flexibel, dass sie sich kurvenförmig in den Hohlraum eines Rollladenkastens einbringen lassen, gleichzeitig sind die Materialien formstabil, sodass der erforderliche Abstand zwischen der Dämmplatte und dem Rollladenpanzer erhalten bleibt. Empfehlenswert ist eine zusätzliche mechanische Sicherung, zum Beispiel durch Kleben oder Verschrauben oder dergleichen.

Es wird besonders bevorzugt, dass das expandierte Polyethylen bzw. das expandierte Polypropylen eine Dichte von 5 bis 170 kg/m³, insbesondere von 10 bis 50 kg/m³, aufweist.

Im Rahmen der Erfindung kann es vorgesehen sein, dass das expandierte Polyethylen bzw. das expandierte Polypropylen des Rollladenkastens eine Bruchdehnung von wenigstens 10 %, vorzugsweise mehr als 20 % und besonders bevorzugt 30 bis 60 %, aufweist. Diese hohe Bruchdehnung ermöglicht es, die Dämmplatten in vorhandene, eingebaute Rollladenkästen nachträglich im Rahmen einer Sanierung einzubringen. Durch diese Flexibilität wird eine Rissbildung und Materialschwächung und eine Verringerung des Wärmedämmvermögens der Platte minimiert bzw. vermieden, die bei der Verwendung von Polystyrol zu erwarten wären. Ein weiterer Vorteil ist dabei, dass die Dämmplatte eine konstante Dicke aufweist, sodass die Wärme- bzw. Schallisolierung ebenfalls homogen ist.

Bei dem erfindungsgemäßen Rollladenkasten kann die Dicke der Dämmplatte 5 bis 700 mm und/oder die Breite der Dämmplatte 10 bis 4.000 mm betragen. Beim Einbringen der Dämmplatten in den Rollladenkasten werden die Dämmplatten auf das erforderliche Maß geschnitten, es kann auch vorgesehen sein, dass die Dämmplatten in regelmäßigen Abschnitten eine zumindest teilweise durchgehende Perforation oder eine andere Querschnittsverringerung aufweisen, sodass die Dämmplatten leicht durchtrennt bzw. geteilt werden können.

Durch die einfache Bearbeitungsmöglichkeit beim Zuschnitt der Platte wurde das Verletzungspotential, welches bei der Be- und Verarbeitung herkömmlicher Platten gegeben ist, z. B. durch Spanbildung und dadurch mögliche Brandgefahr, da der Metallkern herkömmlicher Platten nur maschinell durchtrennbar ist, weitgehend eingedämmt.

Da die Dämmplatte des erfindungsgemäßen Rollladenkastens wie bereits erwähnt besonders biegsam ist, kann die Dämmplatte zumindest abschnittsweise gebogen oder gekrümmt in den Rollladenkasten eingesetzt werden oder sein. Insbesondere kann es vorgesehen sein, dass eine Dämmplatte sich über zwei oder drei benachbarte Wände des Rollladenkastens erstreckt. Dadurch werden Stöße vermieden, die ansonsten wieder abgedichtet werden müssten, damit keine Wärmebrücken entstehen. Die Dämmplatten können aneinandergereiht werden.

Im Rahmen einer Weiterbildung der Erfindung kann es vorgesehen sein, dass auch an den Stirnflächen des Rollladenkastens Dämmplatten angebracht sind, die vorzugsweise eine Ausnehmung für eine Wickelwelle des Rollladenpanzers aufweisen. Auf diese Weise können alle Wände des Rollladenkastens gedämmt werden, sodass die unerwünschten Wärmeverluste minimiert werden.

Um die Handhabung der Dämmplatten bei der Sanierung eines Rollladenkastens zu erleichtern, kann es vorgesehen sein, dass eine Dämmplatte auch mit einem Klebstoff beschichtet oder mit einem Klebeband oder einem Schaum versehen ist oder wird. Vorzugsweise handelt es sich dabei um ein doppelseitiges Klebeband, das auf die Dämmplatte aufgeklebt ist und dessen Schutzfolie unmittelbar vor dem Einsetzen der Dämmplatte in den Rollladenkasten abgezogen wird. Alternativ kann die Dämmplatte auch mit einem herkömmlichen Klebstoff oder einem Schaum in dem Rollladenkasten fixiert werden.

Es sind auch Ausführungen denkbar, bei denen die Dämmplatte auf einer Seite zumindest teilweise eine reflektierende Folie aufweist. Diese Folie trägt ebenfalls zur Verringerung der Wärmeübertragung bei.

Daneben betrifft die Erfindung ein Verfahren zur Herstellung einer Dämmplatte aus expandiertem Polyethylen (EPE) oder expandiertem Polypropylen (EPP), mit den folgenden Schritten: Vorschäumen von Rohmaterial, in variablen Dichten von 10 - 170 kg/m³, das vorzugsweise als Granulat mit und ohne Druckbeladung verarbeitet wird, Verarbeitung in einem Schäumautomat, Formteilproduktion, Stabilisierung.

Vorzugsweise erfolgt die Druckaufladung bei einem Druck von 0,1·10⁵ 5,0·10⁵ Pa. Weiterhin kann bei dem erfindungsgemäßen Verfahren der Dampfdruck auf der Fahrseite und der Festseite 0,0 bis 1,0·10⁵ Pa betragen. Es kann auch vorgesehen sein, dass die Verarbeitung mit Zuschaltung eines Autoklav bei einem Druck von 0,0 bis 5,0·10⁵ Pa erfolgt.

Weiterhin betrifft die Erfindung die Verwendung einer Platte aus expandiertem Polyethylen (EPE) oder expandiertem Polypropylen (EPP). Erfindungsgemäß ist vorgesehen, dass diese Platte als Dämmplatte zur Wärme- und/oder Schalldämmung in einem Rollladenkasten oder bei einem Dach oder einer Wand eines Gebäudes verwendet wird.

Nachfolgend wird die Erfindung anhand von Ausführungsbeispielen unter Bezugnahme auf die Figuren erläutert. Die Figuren sind schematische Darstellungen und zeigen:
- Fig. 1: eine Dämmplatte für einen erfindungsgemäßen Rollladenkasten in umgebogenem Zustand in einer geschnittenen Ansicht;
- Fig. 2A, 2B und 2C: einen Rollladenkasten vor und nach der Sanierung in geschnittenen Ansichten;
- Fig. 3A und 3B: ein zweites Ausführungsbeispiel eines Rollladenkastens vor und nach der Sanierung in einer geschnittenen Ansicht; und
- Fig. 4A und 4B: ein drittes Ausführungsbeispiel eines erfindungsgemäßen Rollladen- kastens mit einer Dämmplatte in perspektivischen Ansichten.

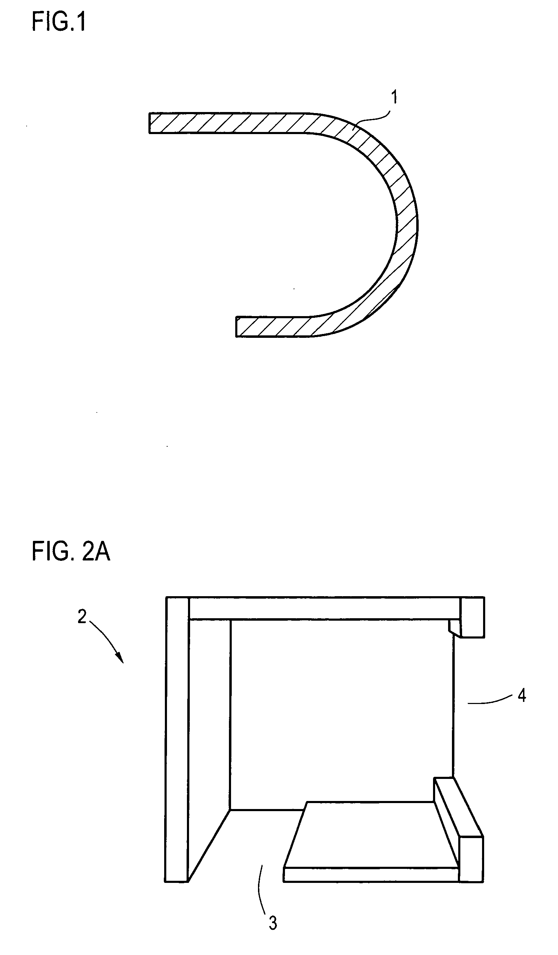

Zur Herstellung einer Dämmplatte wird expandiertes Polyethylen bzw. expandiertes Polypropylen verwendet, das zunächst als kugelförmiges Granulat in unterschiedlichen Dichten von 5 bis 170 kg/m³ vorliegt und in einem Schäumprozess als bereits aufgeladenes oder unaufgeladenes Material unter Druckbefüllung in eine Automatenform eingebracht und beidseitig bedampft wird bei einem Dampfdruck auf der Fahrseite und/oder der Festseite zwischen 0,0 und 5,0·10⁵ Pa und gegebenenfalls unter Zuschaltung eines Autoklaven unter Druck zwischen 0,0 und 5,0·10⁵ Pa verarbeitet und aufgeschäumt wird. Durch ein spezielles Stabilisierungsverfahren während eines Zeitraums von bis zu 2 Wochen entsteht eine Dämmplatte, die zur Wärme- und Schalldämmung verwendet werden kann. Diese Dämmplatte zeichnet sich durch eine hohe Elastizität aus, ihre Bruchdehnung beträgt typischerweise zwischen 30 und 60 %. Anders als bei einer Platte aus Polystyrol lässt sich die Dämmplatte 1, wie in Fig. 1 gezeigt ist, um 180° biegen, ohne dass es zu einer Beschädigung der Oberfläche kommt.

Fig. 2A zeigt einen Querschnitt durch einen Rollladenkasten 2, der an der Unterseite eine Ausnehmung 3 für einen Rollladenpanzer aufweist, zusätzlich befindet sich raumseitig eine Revisionsöffnung 4, die im eingebauten Zustand einen Zugang zum Inneren des Rollladenkastens 2 ermöglicht, indem ein in Fig. 2A nicht gezeigter Deckel entfernt wird.

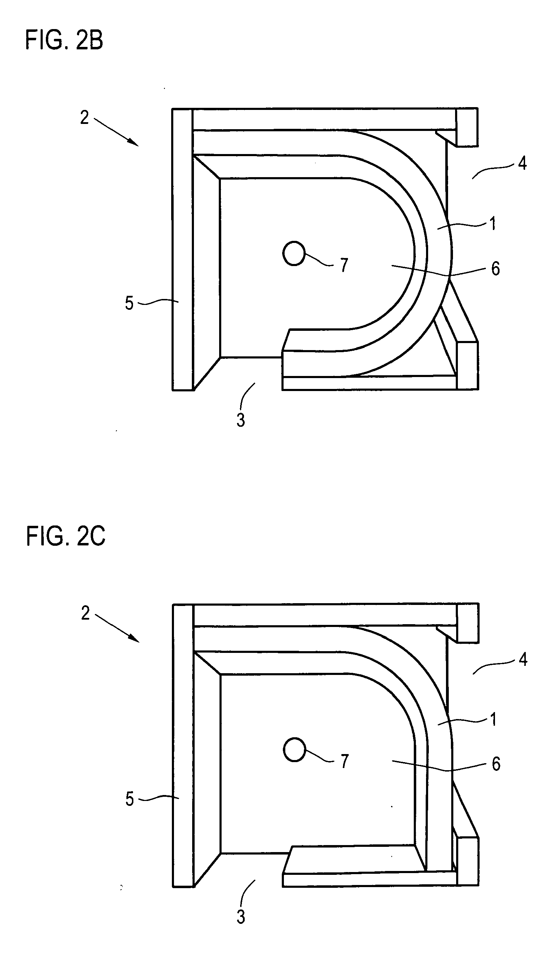

Fig. 2B zeigt den Rollladenkasten 2 nach dem Einbringen der Dämmplatte 1. Die Länge und Breite der Dämmplatte 1 wurde an den Rollladenkasten 2 angepasst, sie stößt mit einem Ende an der senkrechten, äußeren Wand 5 des Rollladenkastens 2 an, das entgegengesetzte Ende schließt bündig mit der Ausnehmung 3 an der Unterseite des Rollladenkastens ab. In diesem gekrümmten Zustand kann in den Hohlraum im Inneren des Rollladenkastens 2 eine Wickelwelle mit einem Rollladenpanzer eingesetzt werden. Wie in Fig. 2B gezeigt ist, befindet sich an der Stirnseite des Rollladenkastens 2 eine weitere Dämmplatte 6, deren Kontur an das Innere des Rollladenkastens 2 angepasst ist und die mit einer Ausnehmung 7 für eine Befestigung der Wickelwelle versehen wurde. Nach der Sanierung wird die Revisionsöffnung 4 wieder verschlossen. Neben der Wärmedämmung bewirkt die Dämmplatte auch eine bessere Schallisolierung.

Fig. 2C zeigt ähnlich wie Fig. 2B den Rollladenkasten 2 mit eingesetzter Dämmplatte 1. Anders als bei dem vorangegangenen Ausführungsbeispiel ist die die Dämmplatte 1 lediglich um etwa 90° gebogen, sodass ihr vertikaler Abschnitt näherungsweise senkrecht auf der Unterseite des Rollladenkastens 2 aufsteht.

Bei sämtlichen in den Ausführungsbeispielen gezeigten Rollladenkästen kann die Dämmplatte zusätzlich mechanisch gesichert sein, beispielsweise durch Verkleben, einen Montageschaum oder eine Verschraubung.

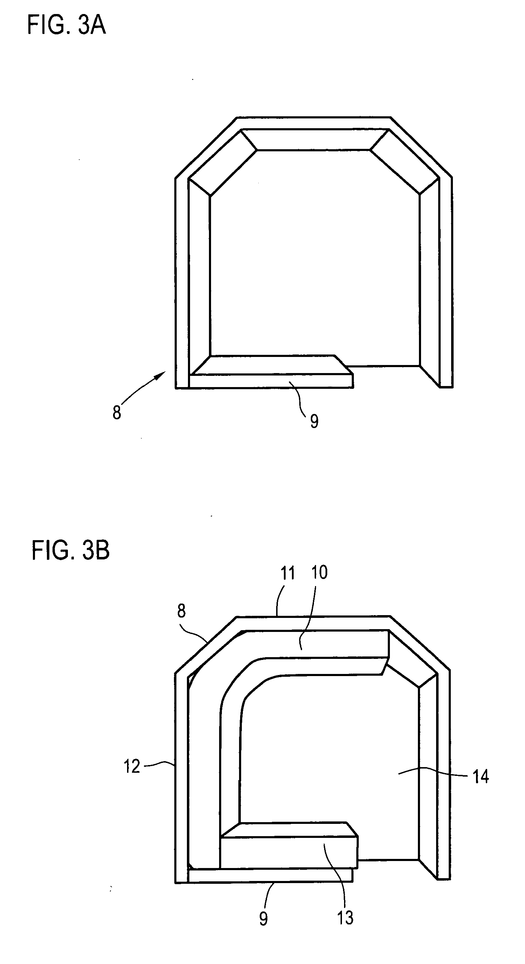

Die Fig. 3A und 3B zeigen ein zweites Ausführungsbeispiel eines Rollladenkastens. Der Rollladenkasten 8 weist im Unterschied zum ersten Ausführungsbeispiel keine seitliche Revisionsöffnung auf, stattdessen ist ein Zugang in das Innere des Rollladenkastens 8 durch Abnehmen einer an der Unterseite des Rollladenkastens 8 angeordneten Deckelplatte 9 möglich. In den Rollladenkasten 8 wird eine erste Dämmplatte 10 eingebracht, die die obere Fläche 11 und die Seitenfläche 12 des Rollladenkastens 8 innenseitig abdeckt. Die Dämmplatte 10 ist mit einem doppelseitigen Klebeband versehen, dessen Schutzfolie abgezogen wird, um die Dämmplatte 10 im Inneren des Rollladenkastens 8 zu befestigen. Die Deckelplatte 9 wird mit einer weiteren, separaten Dämmplatte 13 versehen, die an die Dämmplatte 10 anstößt, sodass der Stoß ebenfalls abgedichtet ist. Die mit der Dämmplatte 13 versehene Deckelplatte 9 kann jedoch nachträglich abgenommen werden, sodass die Zugänglichkeit zum Inneren des Rollladenkastens 8 auch nach der Sanierung gewährleistet ist. Wie bei dem ersten Ausführungsbeispiel können auch die Stirnseiten 14 des Rollladenkastens 8 jeweils mit einer Dämmplatte versehen werden.

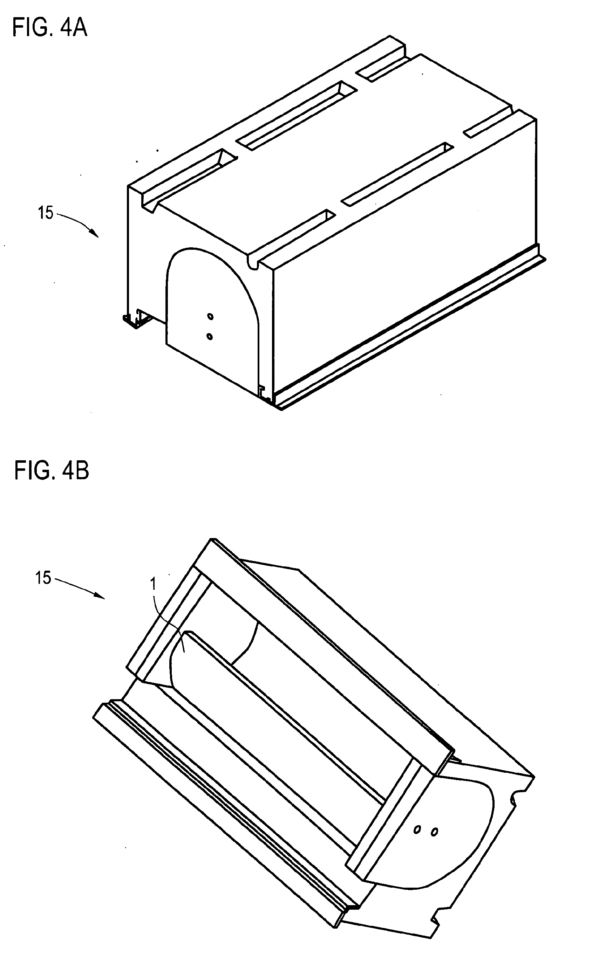

Die Fig. 4A und 4B zeigen ein weiteres Ausführungsbeispiel eines Rollladenkastens 15 in perspektivischen Ansichten. Fig. 4A zeigt die Position des Rollladenkastens 15 im eingebauten Zustand. In Fig. 4B ist die offene Seite des Rollladenkastens 15 mit eingesetzter Dämmplatte 1 gezeigt.

Die aus expandiertem Polyethylen oder expandiertem Polypropylen bestehende Dämmplatte kann auch bei einem Dach oder einer Wand eines Gebäudes zur Wärme- und/oder Schalldämmung verwendet werden, durch die gute Biegsamkeit ist gewährleistet, dass auch solche Bereiche wirksam gedämmt werden können, bei denen sprödbrüchige Werkstoffe wie Polystyrol Probleme bereiten. Die Dämmplatte kann somit als Ersatz für herkömmliche Dämmstoffe eingesetzt werden, um unerwünschte Wärmeverluste bei Dächern oder Gebäudewänden zu vermeiden.

## Patentansprüche

1. Rollladenkasten, mit einer im Wesentlichen quaderförmigen Grundform, in dem ein Hohlraum zum Aufnehmen eines Rollladenpanzers gebildet ist, wobei an einer oder mehreren den Hohlraum begrenzenden Wänden des Rollladenkastens eine Dämmplatte aus einem wärmedämmenden Material angebracht ist, **dadurch gekennzeichnet, dass** die Dämmplatte (1, 6, 10, 13) aus expandiertem Polyethylen (EPE) oder expandiertem Polypropylen (EPP) besteht.

2. Rollladenkasten nach Anspruch 1, **dadurch gekennzeichnet, dass** das expandierte Polyethylen bzw. das expandierte Polypropylen eine Dichte von 5 bis 170 kg/m³, insbesondere von 10 bis 50 kg/m³,aufweist.

3. Rollladenkasten nach Anspruch 1 oder 2, **dadurch gekennzeichnet, dass** das expandierte Polyethylen bzw. das expandierte Polypropylen eine Bruchdehnung von wenigstens 10 %, vorzugsweise mehr als 20 % und besonders bevorzugt 30 bis 60 %, aufweist.

4. Rollladenkasten nach einem der vorangehenden Ansprüche, **dadurch gekennzeichnet, dass** die Dicke der Dämmplatte (1, 6, 10, 13) 5 bis 700 mm und/oder die Breite der Dämmplatte (1, 6, 10, 13) 10 bis 3500 mm beträgt.

5. Rollladenkasten nach einem der vorangehenden Ansprüche, **dadurch gekennzeichnet, dass** die oder eine Dämmplatte (1, 6, 10, 13) zumindest abschnittsweise gebogen oder gekrümmt in den Rollladenkasten (2, 8, 15) eingesetzt ist.

6. Rollladenkasten nach einem der vorangehenden Ansprüche, **dadurch gekennzeichnet, dass** eine Dämmplatte (1, 10) sich über zwei oder drei benachbarte Wände des Rollladenkastens (2, 8, 15) erstreckt.

7. Rollladenkasten nach einem der vorangehenden Ansprüche, **dadurch gekennzeichnet, dass** an den Stirnseiten (14) des Rollladenkastens (2, 8) Dämmplatten (6) angebracht sind, die vorzugsweise eine Ausnehmung (7) für eine Wickelwelle des Rollladenpanzers aufweisen.

8. Rollladenkasten nach einem der vorangehenden Ansprüche, **dadurch gekennzeichnet, dass** eine Dämmplatte (1, 6, 10, 13) mit einem Klebstoff beschichtet oder mit einem Klebeband versehen ist.

9. Rollladenkasten nach einem der vorangehenden Ansprüche, **dadurch gekennzeichnet, dass** die Dämmplatte auf einer Seite zumindest teilweise eine reflektierende Folie aufweist.

10. Verfahren zur Herstellung einer Dämmplatte aus expandiertem Polyethylen (EPE) oder expandiertem Polypropylen (EPP), mit den folgenden Schritten:
- Vorschäumen von Rohmaterial, das vorzugsweise als Granulat verarbeitet wird,
- Druckaufladung,
- Verarbeitung in einem Schäumautomat,
- Formteilproduktion,
- Trocknung.

11. Verfahren nach Anspruch 10, **dadurch gekennzeichnet, dass** die Druckaufladung bei einem Druck von 0,1·10⁵ Pa bis 5,0·10⁵ Pa erfolgt.

12. Verfahren nach Anspruch 10 oder 11, **dadurch gekennzeichnet, dass** der Dampfdruck auf der Fahrseite und der Festseite 0,0 bis 1,0 ·10⁵ Pa beträgt.

13. Verfahren nach einem der Ansprüche 10 bis 12, **dadurch gekennzeichnet, dass** die Verarbeitung in einem Autoklav bei einem Druck von 0,0 bis 5,0·10⁵ Pa erfolgt.

14. Verwendung einer Platte aus expandiertem Polyethylen (EPE) oder expandiertem Polypropylen (EPP) als Dämmplatte (1, 6, 10, 13) zur Wärme- und/oder Schalldämmung in einem Rollladenkasten (2, 8, 15) oder bei einem Dach oder einer Wand eines Gebäudes, wobei die Dicke der Dämmplatte vorzugsweise 1 bis 25 cm beträgt.
